# EUROPÄISCHE PATENTANMELDUNG

(11) **EP 1 477 350 A2**
(43) Veröffentlichungstag der Anmeldung: **17.11.2004**
(21) Anmeldenummer: 04009062.3
(22) Anmeldetag: 16.04.2004
(51) Int. Cl.: B60J 5/10

(54) **Relativ ebenes Blech oder Blechabschnitt**

(30) Priorität: 15.05.2003 DE 10321752
(71) Anmelder: ThyssenKrupp Automotive AG, 44793 Bochum (DE)
(72) Erfinder: Hertl, Ronald, Dipl.-Ing., 33619 Bielefeld (DE)
(74) Vertreter: Adams, Steffen

(57) **Zusammenfassung**

Um ein relativ ebenes Blech oder Blechabschnitt derartig zu gestalten, dass es bei einer minimalen Krümmung eine hohe Beulsteifigkeit aufweist, besteht sein Querschnitt aus wenigstens zwei zusammengesetzten Parabelabschnitten (14, 15) unterschiedlicher Form mit zum Rand (16) sich wendepunktfrei verstärkender Krümmung, wobei die Tangenten (T) der Parabelabschnitte (14, 15) am Übergang zwischen den Parabeln oder evtl. zwischenliegenden Krümmungsabschnitten die gleiche Steigung aufweisen.

## Beschreibung

Die Erfindung betrifft ein relativ ebenes Blech oder einen relativ ebenen Blechabschnitt eines technischen Bauteils.

Besonders bei Beplankungsblechen für Fahrzeuge, insbesondere Kraftfahrzeuge, werden relativ ebene Bleche verwendet, wenn dieses dem Design des Fahrzeuges entspricht. Insbesondere bei Lieferwagen oder Kastenwagen von Kleinlastwagen werden häufig relativ ebene Bleche verwendet.

Nachteilig bei derartigen Gestaltungen ergibt sich, dass ebene Bleche nur eine geringe Beulsteifigkeit und auch nur eine geringe Formsteifigkeit aufweisen. Besonders wenn die Beplankungsbleche mit anderen Bauteilen verbunden werden, führt das zu Verzügen oder auch Einbeulungen, die zwar nur eine geringe Tiefe aufweisen, aber einen sehr negativen optischen Eindruck hervorrufen. Von daher gibt es verschiedene Lösungsansätze, die Beplankungsbleche von innen zu versteifen. Dieses erfolgt mit Versteifungsrippen oder Schaumauftrag mit Kunststoffschaum. Die vorgenannten Maßnahmen bewirken auch, dass ein Dröhnen der Beplankungsbleche während der Fahrt reduziert werden soll. Dieses Dröhnen entwickelt sich insbesondere bei den Hecktüren von Transportfahrzeugen. Diese Hecktüren werden durch die bekanntermaßen entstehende Wirbelbildung zum Schwingen angeregt und wirken aufgrund ihrer Größe Schall verstärkend wie die Bespannung einer Trommel.

Weiterhin nachteilig neigen nahezu ebene Bleche oder Blechabschnitte dazu, im elastischen Bereich örtlich ein- und auszubeulen. Dieser Effekt wird allgemein als Knackfroscheffekt beschrieben. Der vorstehend beschriebene Knackfroscheffekt tritt besonders beim örtlichen Anlehnen gegen das Beplankungsblech oder auch beim Polieren auf.

Der Erfindung liegt die Aufgabe zugrunde, relativ ebene Bleche oder Blechabschnitte derartig zu gestalten, dass die vorbeschriebenen Nachteile nur noch in geringem Maße auftreten. Dabei soll erreicht werden, dass die Bleche oder Blechabschnitte bei einer minimalen Krümmung eine hohe Beulsteifigkeit aufweisen.

Diese Aufgabe wird erfindungsgemäß durch die Merkmale des Anspruchs 1 gelöst. Vorteilhafte Aus- und Weiterbildungen sind in den Ansprüchen 2 bis 12 beschrieben.

Die mit der Erfindung erzielten Vorteile bestehen insbesondere darin, dass mit geringem Materialeinsatz bei relativ ebenen Blechen oder Blechabschnitten eine hohe Beulsteifigkeit erreicht wird. Besonders vorteilhaft wird erreicht, dass bei Beplankungsblechen für Kraftfahrzeugaufbauten auch nach dem Verbinden mit anderen Konstruktionsteilen eine derartig geringe Verformung auftritt, dass diese optisch nicht erkennbar ist. Weiterhin vorteilhaft wird der Knackfroscheffekt wesentlich verringert. Darüber hinaus kann die Form auf Pressen sicherer hergestellt werden als bei beliebig geformten relativ ebenen Blechen oder Blechabschnitten. Das führt vorteilhaft zu einem geringeren Ausschuss bzw. zu geringerer Nacharbeit.

Ein Ausführungsbeispiel der Erfindung ist in der Zeichnung dargestellt und wird im Folgenden näher beschrieben. Es zeigen
- Figur 1: die Ansicht einer Hecktür für einen Lieferwagen,
- Figuren 2 und 3: einen Blechabschnitt dieser Fahrzeugtür und
- Figur 4: einen Halbschnitt durch diesen Blechabschnitt.

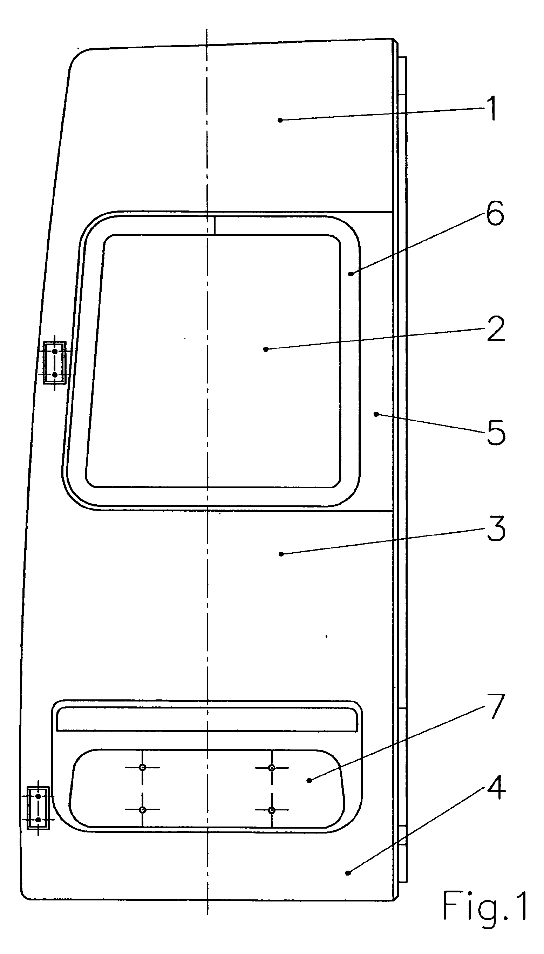

Die in Figur 1 dargestellte Hecktür weist ein Beplankungsblech mit mehreren Blechabschnitten auf. Es handelt sich hier um den oberen Blechabschnitt 1, den Fensterabschnitt 2, den Türabschnitt 3 und den unteren Blechabschnitt 4. Sämtliche Blechabschnitte 2, 4, der Fensterabschnitt 2 und der Türabschnitt 3 weisen eine separate Wölbung gemäß der Erfindung auf. Zwischenabschnitte wie die Fensterholme 5 sind optisch angepasst. Zwischen den einzelnen Abschnitten 2, 3, 4 der Tür sind Versteifungsprägungen 6 angeordnet. Auch die Nummernschildaufnahme 7 wirkt durch ihre Prägungen als Versteifung.

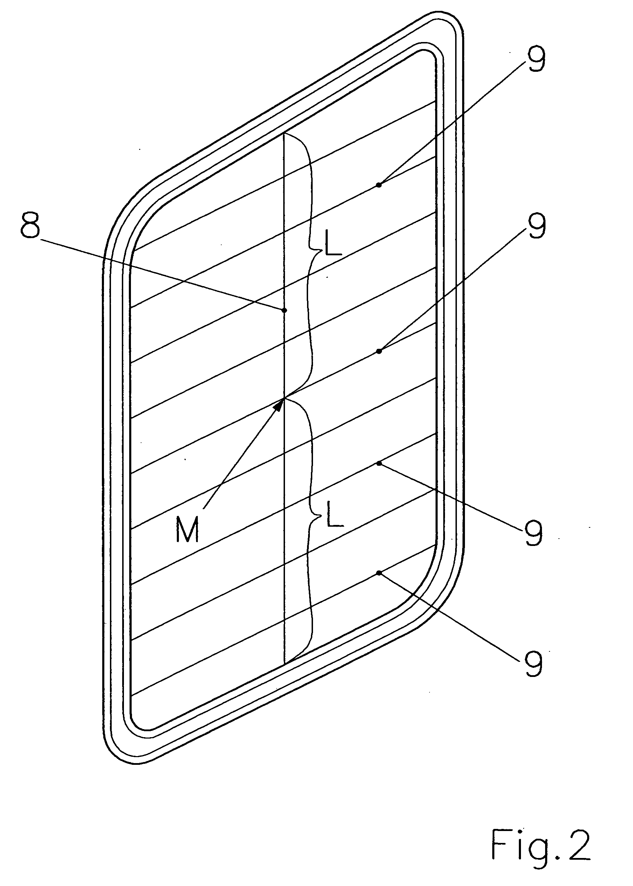

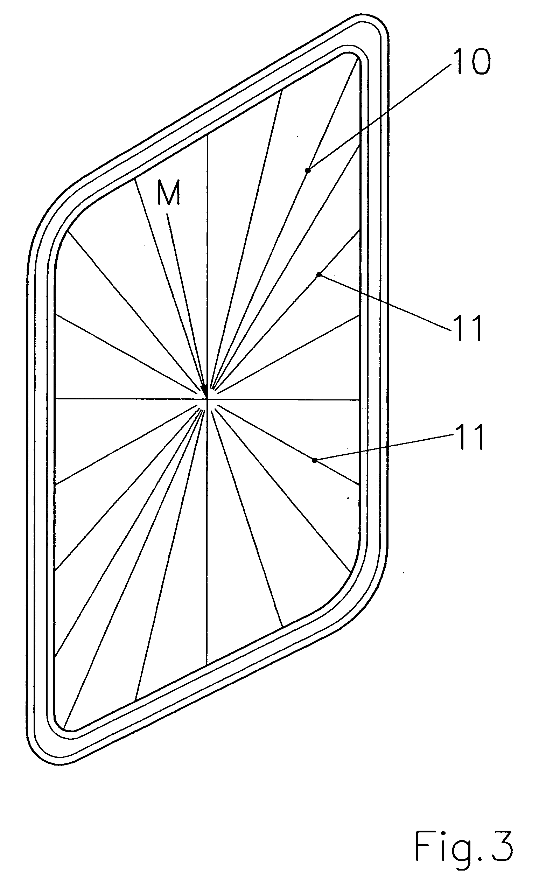

Zur Beschreibung der erfindungsgemäßen räumlichen Krümmung wird auf die Figuren 2 bis 4 verwiesen. Figuren 2 und 3 zeigen eine vergrößerte Darstellung des Fensterabschnitts 2. Die Linien 8 bis 11 in den Figuren 2 und 3 bezeichnen die Lage verschiedener Wölbungsquerschnitte in der Fläche des Fensterabschnitts 2. Der in den Figuren 2 und 3 erkennbare Rahmen ist die Versteifungsprägung 6 gemäß Figur 1. Wie aus Figur 1 klar ersichtlich, muss diese Versteifungsprägung nicht auf einer Ebene angeordnet sein. Sie kann vielmehr je nach den optischen Erfordernissen und den stilistischen Mitteln auch noch in sich gekrümmt sein.

Die Wölbung der Fensterabschnittfläche 2 bemisst sich aus der Längsachse entsprechend der Linie 8, da sie in etwa die größte Erstreckung aufweist. Die sich quer zum Wölbungsquerschnitt entsprechend der Linie 8 erstreckenden Wölbungsquerschnitte entsprechend den Linien 9 sind zwar ebenso wie die Wölbung auf der Linie 8 aus zwei Parabeln dritter Ordnung zusammengesetzt. Ihre größte Höhe H ist jedoch der jeweiligen Höhe des Wölbungsquerschnitts im Schnittpunkt mit der Linie 8 angepasst.

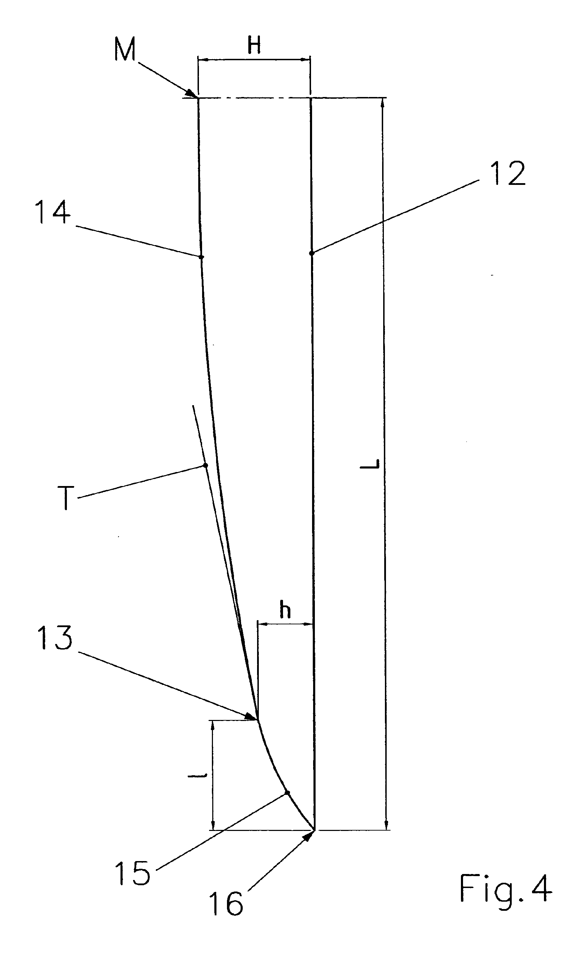

Die Form der Wölbung aller Wölbungsquerschnitte ist in Figur 4 dargestellt. Wie bereits erwähnt, bestimmt sich die Wölbung des Fensterabschnitts 2 gemäß Figur 2 nach dem Wölbungsquerschnitt entlang der Linie 8. Die maximale Höhe H beträgt im Ausführungsbeispiel 0,015 der Hälfte der Linie 8 entsprechend der Länge L. Die Form der Wölbung der Linie 8 gemäß Figur 2 ist in Figur 4 dargestellt. Die Krümmung des Wölbungsquerschnitts wird durch 2 Parabelabschnitte 14, 15 dritter Ordnung gebildet. Der Parabelabschnitt 14 mit der schwächeren Krümmung ist so gedreht, dass seine Tangente im Mittelpunkt M parallel zur Aufstandslinie 12 des Querschnitts auf der Linie 8 verläuft. Der Übergang 13 zwischen den beiden Parabelabschnitten 14, 15 dritter Ordnung liegt mit einer Höhe h über der Aufstandslinie, die 0,5 der Höhe H entspricht. Die Entfernung I des Übergangs 13 vom Rand 16 des Blechabschnitts, an dem die Wölbung beginnt, ist mit 0,15 der Länge L bemessen. Dieser Rand 16 entspricht nach den Figuren 2 und 3 dem Anschluss an die Versteifungsprägung 6.

Sämtliche vorgenannten Werte im Ausführungsbeispiel beziehen sich auf die Ausbildung für Bleche aus Stahl mit einer Dicke von 0,8 bis 1,2 mm. Es hat sich gezeigt, dass ein Blech mit der erfindungsgemäßen Wölbung in der Lage ist, einem Beuldruck zu widerstehen, der dem fünffachen Beuldruck einer beliebigen anderen Krümmung mit gleicher Überhöhung entspricht.

Die Wölbung bei der Ausbildung eines Blechteils gemäß Figur 3 ist anders gestaltet als die Wölbung gemäß Figur 2. Die Höhe H der Wölbung bemisst sich nach der Hälfte der längsten Diagonale (Linie 10), hier L bezeichnet. Der First aller Wölbungen läuft in einem Mittelpunkt M zusammen. Das führt dazu, dass alle Wölbungen die gleiche Höhe H aufweisen. Die Krümmungen der Wölbungen der anderen Schnitte auf den Linien 11 sind demgemäß angepasst. Die Verhältnisse der Punkte des Übergangs 13 zwischen den Parabelabschnitten 14, 15 entsprechen jedoch auch in diesem Ausführungsbeispiel dem Ausführungsbeispiel gemäß Figur 2.

Bei anderen Materialien, insbesondere beispielsweise bei Aluminium, das einen anderen E-Modul aufweist, sind selbstverständlich die aus den Parabelabschnitten zusammengesetzten Krümmungen anders zu bemessen. Insbesondere das Verhältnis der Höhe H zur Länge L ist hier den Gegebenheiten des Materials anzupassen.

### Bezugszeichenliste

- 1.: Blechabschnitt
- 2.: Fensterabschnitt
- 3.: Türabschnitt
- 4.: Blechabschnitt
- 5.: Fensterholm
- 6.: Versteifungsprägung
- 7.: Nummernschildaufnahme
- 8.: Linie
- 9.: Linie
- 10.: Linie
- 11.: Linie
- 12.: Aufstandslinie
- 13.: Übergang
- 14.: Parabelabschnitt
- 15.: Parabelabschnitt
- 16.: Rand
- H: Höhe
- h: Höhe
- L: Länge
- I: Entfernung
- M: Mittelpunkt

## Patentansprüche

1. Relativ ebenes Blech oder Blechabschnitt, **dadurch gekennzeichnet, dass** sein Querschnitt aus wenigstens zwei zusammengesetzten Parabelabschnitten (14, 15) unterschiedlicher Form mit zum Rand (16) sich wendepunktfrei verstärkender Krümmung besteht, wobei die Tangenten (T) der Parabelabschnitte (14, 15) am Übergang zwischen den Parabeln oder evtl. zwischenliegenden Krümmungsabschnitten die gleiche Steigung aufweisen.

2. Relativ ebenes Blech oder Blechabschnitt nach Anspruch 1, **dadurch gekennzeichnet, dass** die wendepunktfreie Krümmung symmetrisch um die Mitte des Bleches oder Blechabschnittes ausgebildet ist und in der Mitte mit zur Gesamterstreckung des Bleches paralleler Tangente ineinander übergeht.

3. Relativ ebenes Blech oder Blechabschnitt nach Anspruch 2, **dadurch gekennzeichnet, dass** die jeweiligen Krümmungen räumlich symmetrisch um die zwei Hauptachsen des Bleches oder Blechabschnitts verlaufen.

4. Relativ ebenes Blech oder Blechabschnitt nach Anspruch 2, **dadurch gekennzeichnet, dass** die jeweiligen Krümmungen räumlich symmetrisch um einen Mittelpunkt (M) des Bleches oder Blechabschnittes verlaufen.

5. Relativ ebenes Blech oder Blechabschnitt nach einem oder mehreren der Ansprüche 1 bis 4, **dadurch gekennzeichnet, dass** die Krümmung symmetrisch jeweils aus zwei Parabelabschnitten (14, 15) pro Seite gebildet wird.

6. Relativ ebenes Blech oder Blechabschnitt nach einem oder mehreren der Ansprüche 1 bis 5, **dadurch gekennzeichnet, dass** die Parabelabschnitte (14, 15) aus Parabeln dritter Ordnung gebildet sind.

7. Relativ ebenes Blech oder Blechabschnitt nach einem oder mehreren der Ansprüche 1 bis 6, **dadurch gekennzeichnet, dass** der Übergang (13) zwischen den Parabelabschnitten (14, 15) in einer Höhe (h) zur Aufstandslinie (12) des Bleches oder Blechabschnitts liegt, der etwa der halben Höhe (H) der gesamten Krümmung über der Aufstandslinie (12) entspricht.

8. Relativ ebenes Blech oder Blechabschnitt, **dadurch gekennzeichnet, dass** die Entfernung (I) des Überganges (13) zwischen den Parabelabschnitten (14, 15) vom Rand (16) des Bleches oder Blechabschnittes 0,1 bis 0,2 der halben größten Erstreckung oder Diagonale (Länge L) des Bleches oder Blechabschnittes entspricht.

9. Relativ ebenes Blech oder Blechabschnitt nach einem oder mehreren der Ansprüche 1 bis 7, **dadurch gekennzeichnet, dass** die Entfernung (I) des Übergangs (13) zwischen den Parabelabschnitten (14, 15) vom Rand (16) des Bleches oder Blechabschnittes 0,15 der halben größten Erstreckung oder Diagonale (Länge L) des Bleches oder Blechabschnittes entspricht.

10. Relativ ebenes Blech oder Blechabschnitt nach einem oder mehreren der Ansprüche 1 bis 9, **dadurch gekennzeichnet, dass** die Höhe (H) der gesamten Krümmung 0,010 bis 0,030 der halben größten Erstreckung oder Diagonale (Länge L) des Bleches oder Blechabschnittes entspricht.

11. Relativ ebenes Blech oder Blechabschnitt nach einem oder mehreren der Ansprüche 1 bis 9, **dadurch gekennzeichnet, dass** die Höhe (H) der gesamten Krümmung 0,015 bis 0,020 der halben größten Erstreckung oder Diagonale (Länge L) des Bleches oder Blechabschnittes entspricht.

12. Relativ ebenes Blech oder Blechabschnitt, **dadurch gekennzeichnet, dass** ein großes ebenes Blechteil aus mehreren Blechabschnitten zusammengesetzt ist, die durch Versteifungsprägungen (6) verbunden sind, wobei ein oder mehrere Blechabschnitt jeweils nach einem oder mehreren der Ansprüche 1 bis 11 ausgebildet sind.
